(19) Europäisches Patentamt
European Patent Office
Office européen des brevets

(11) EP 4 357 126 A1

(12) EUROPEAN PATENT APPLICATION
published in accordance with Art. 153(4) EPC

(43) Date of publication:
**24.04.2024 Bulletin 2024/17**

(21) Application number: **22876793.5**

(22) Date of filing: **27.09.2022**

(51) International Patent Classification (IPC):
***B32B 7/023*** *(2019.01)* ***B32B 37/26*** *(2006.01)*
***B32B 37/12*** *(2006.01)* ***B32B 27/30*** *(2006.01)*
***G02B 5/30*** *(2006.01)* ***G02B 1/04*** *(2006.01)*
***G02B 1/14*** *(2015.01)*

(52) Cooperative Patent Classification (CPC):
**B32B 7/023; B32B 27/30; B32B 37/12; B32B 37/26; G02B 1/04; G02B 1/14; G02B 5/30; G02F 1/1335; G02F 1/13363**

(86) International application number:
**PCT/KR2022/014425**

(87) International publication number:
**WO 2023/055021 (06.04.2023 Gazette 2023/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **28.09.2021 KR 20210127985**

(71) Applicant: **LG Chem, Ltd.**
**Yeongdeungpo-gu**
**Seoul 07336 (KR)**

(72) Inventors:
- **KIM, Young Jin**
**Daejeon 34122 (KR)**
- **KIM, Do Hyun**
**Daejeon 34122 (KR)**
- **LEE, Sung Yoon**
**Daejeon 34122 (KR)**
- **LEE, Dae Hee**
**Daejeon 34122 (KR)**
- **KIM, Jeong Yeun**
**Daejeon 34122 (KR)**

(74) Representative: **Hoffmann Eitle**
**Patent- und Rechtsanwälte PartmbB**
**Arabellastraße 30**
**81925 München (DE)**

# (54) METHOD FOR MANUFACTURING POLARIZING PLATE

(57) The present application relates to a method for manufacturing a polarizing plate. The present application can provide a method for manufacturing a polarizing plate, wherein the manufacturing processes are simple and the manufacturing cost can be reduced. Such a polarizing plate can be used as an optical compensation polarizing plate in various display devices.

EP 4 357 126 A1

[Figure 1]

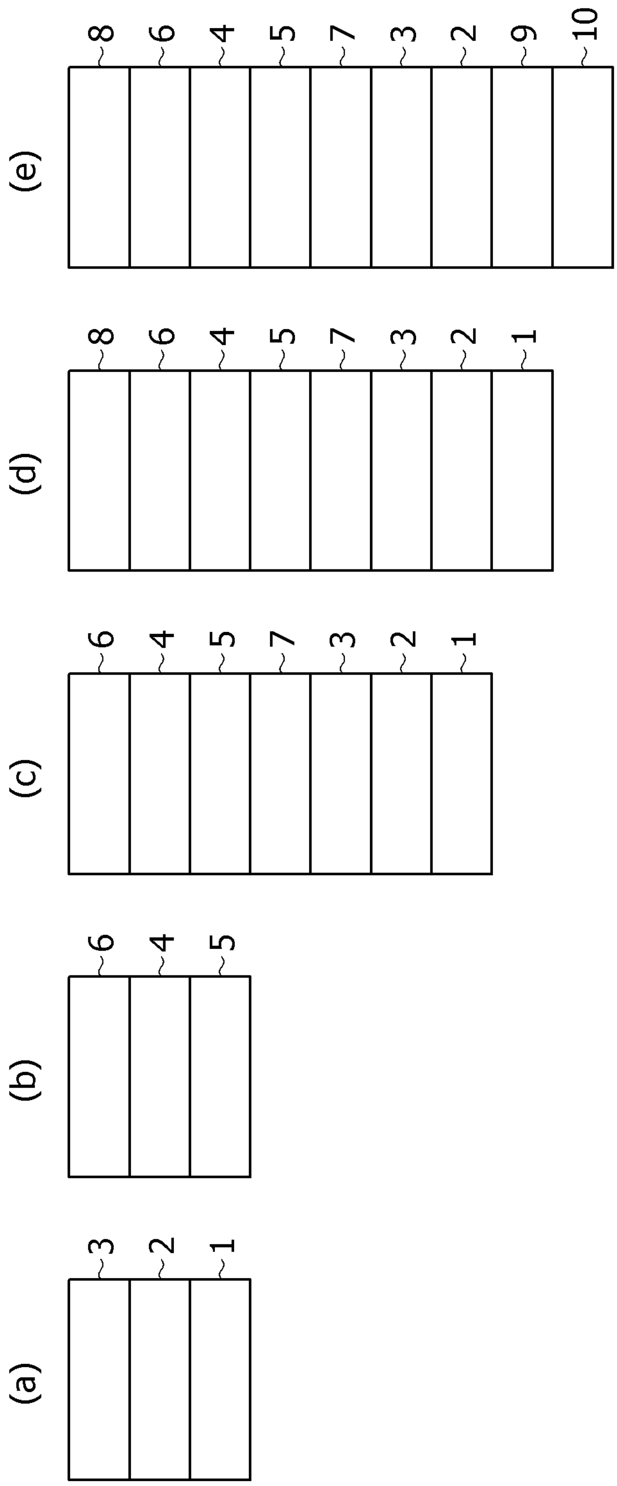

## Description

[Technical field]

The present application relates to a method for manufacturing a polarizing plate.

[Background Art]

As a polarizing plate comprising an optical compensation film, there is a polarizing plate comprising a -B plate and a +C plate. As the -B plate, a stretched polymer film, for example, a COP film (cycloolefin polymer film) may be used, and as the +C plate, for example, a liquid crystal layer may be used. The optical compensation film may be prepared, for example, by a method of directly coating a liquid crystal composition on the -B plate, and the polarizing plate may be manufactured by laminating the prepared optical compensation film with a polarizer((Patent Document 1: Korean Patent Registration Publication No. 10-0767210).

[Disclosure]

[Technical Problem]

However, when the polarizing plate is manufactured as above, there are several problems.

In the case of coating the vertically aligned liquid crystal on the -B plate in the manufacturing process of the optical compensation film, there may be a situation in which even the expensive COP film must be discarded together due to poor liquid crystal orientation and liquid crystal stains.

In addition, when the vertically aligned liquid crystal is coated on the -B plate, a protective film such as a PET (polyethylene terephthalate) film may be laminated on the vertically aligned liquid crystal layer to protect the optical compensation film. In order to check the quality of the polarizing plate, it is necessary to perform a cross pol. test during the manufacturing process of the polarizing plate, and by checking the quality during the manufacturing process of the polarizing plate, appropriate measures can be taken when a defect occurs. However, when the PET film is present, there is a disadvantage that the cross pol. test is not possible due to the anisotropy of the PET film. For this reason, in the process after stretching of the polarizer, a cross pol. test is inevitably performed after the PET film is peeled off, and when the quality of the manufactured polarizing plate is not good, it cannot be used in the roll process, so that the manufacturing cost can be increased.

The present application provides a method for manufacturing a polarizing plate comprising an optical compensation film, wherein the manufacturing processes are simple and the manufacturing cost can be reduced.

[Technical Solution]

The present application relates to a method for manufacturing a polarizing plate. The method for manufacturing a polarizing plate of the present application may comprise a step of laminating a first laminate comprising a carrier film and a vertically aligned liquid crystal layer, and a second laminate comprising a negative biaxial retardation film and a polarizer via an adhesive layer to manufacture a third laminate.

As the carrier film, an optically isotropic film or a super retardation film may be used. The optically isotropic film may mean, for example, a film having an absolute value of an in-plane retardation (Rin) value of 10 nm or less and an absolute value of a thickness direction retardation (Rth) value of 40 nm or less. The optically isotropic film may be exemplified by, for example, TAC (triacetyl cellulose), and the like. As the super retardation film, a film having an absolute value of an in-plane retardation (Rin) value of 4,000 nm or more and an absolute value of a thickness direction retardation (Rth) value of 40 nm or less may be used. In the super retardation film, the upper limit of the absolute value of the in-plane retardation (Rin) value may be, for example, 10,000 nm or less. As the high retardation film, a polymer film known in the relevant industry may be used.

In this specification, the in-plane retardation (Rin) value may be a value calculated according to Equation 1 below, and the thickness direction retardation (Rth) value may be a value calculated according to Equation 2 below. Unless otherwise stated in the present application, the in-plane retardation (Rin) value and the thickness direction retardation (Rth) value may be values measured for light with a wavelength of 550 nm.

[Equation 1]

$$Rin = (nx - ny) \times d$$

[Equation 2]

$$Rth = \{(nx+ny)/2-nz\} \times d$$

In Equations 1 and 2, nx, ny, and nz mean refractive indexes of the carrier film, the vertically aligned liquid crystal layer, or the negative biaxial retardation film for a wavelength of 550 nm in the x-axis, y-axis, and z-axis directions, respectively. The x-axis means an axis parallel to the slow axis direction of the carrier film, the vertically aligned liquid crystal layer, or the negative biaxial retardation film, and the y-axis means an axis parallel to the fast axis direction of the carrier film, the vertically aligned liquid crystal layer, or the negative biaxial retardation film, and the z-axis means an axis parallel to the thickness direction of the carrier film, the vertically aligned liquid crystal layer, or the negative biaxial retardation film.

The thickness of the carrier film may be appropriately selected within a range that does not impair the purpose of the present application. The thickness of the carrier film may be, for example, in the range of 60μm to 100μm.

The vertically aligned liquid crystal layer may comprise a liquid crystal compound in a vertically aligned state. In this specification, the vertically aligned state may mean a state where the director of the liquid crystal compound in the liquid crystal layer are arranged approximately perpendicular to the plane of the liquid crystal layer. The angle formed by the director with respect to the plane of the liquid crystal layer may be, for example, within the range of 80 degrees to 100 degrees, 85 degrees to 95 degrees, 87 degrees to 93 degrees, or 89 degrees to 91 degrees, or may be approximately 90 degrees. In this specification, the director of the liquid crystal compound may mean an optical axis or a slow axis of the liquid crystal layer. Alternatively, when the liquid crystal compound has a rod shape, the director of the liquid crystal compound may mean a long axis direction of the rod, and when the liquid crystal compound has a discotic shape, it may mean an axis parallel to the normal direction of the discotic plane.

The vertically aligned liquid crystal layer may comprise a polymerizable liquid crystal compound in a polymerized state. In this specification, the polymerizable liquid crystal compound may mean a molecule containing a moiety capable of exhibiting liquid crystallinity, for example, a mesogen skeleton, and the like, and containing one or more polymerizable functional groups. In addition, the matter that it comprises a polymerizable liquid crystal compound in a polymerized form may mean a state where the liquid crystal compound is polymerized to form a skeleton such as a main chain or side chain of a liquid crystal polymer in the vertically aligned liquid crystal layer. The polymerizable functional group may be exemplified by, for example, an acryloyl group, an acryloyloxy group, a methacryloyl group, a methacryloyloxy group, a carboxyl group, a hydroxyl group, a vinyl group, or an epoxy group, and the like, but is not limited thereto, and a known functional group known as a polymerizable functional group may be included.

The retardation value of the vertically aligned liquid crystal layer may be appropriately controlled according to the desired optical compensation. The absolute value of the in-plane retardation (Rin) value of the vertically aligned liquid crystal layer may be, for example, 10 nm or less, 5 nm or less, 3 nm or less, 1 nm or less, or 0 nm. The thickness direction retardation (Rth) value of the vertically aligned liquid crystal layer may be, for example, -80 nm or more, and may be -150 nm or less.

The vertically aligned liquid crystal layer may be formed by coating the vertically aligned liquid crystal composition on the vertical alignment film and then irradiating it with ultraviolet rays. The ultraviolet rays may be unpolarized ultraviolet rays. The wavelength range of the ultraviolet rays may be, for example, in the range of 320 nm to 400 nm, or in the range of 340 nm to 380 nm. The irradiance level of the ultraviolet rays may be, for example, in the range of 500 $mJ/m^2$ to 1000 $mJ/m^2$.

The thickness of the vertically aligned liquid crystal layer may be appropriately selected within a range that does not impair the purpose of the present application. The thickness of the vertically aligned liquid crystal layer may be, for example, in the range of 0.9μm to 1.2μm.

The first laminate may further comprise a vertical alignment film between the carrier film and the vertically aligned liquid crystal layer. One side of the vertical alignment film may be in direct contact with the carrier film. The other side of the vertical alignment film may be in direct contact with the vertically aligned liquid crystal layer.

The vertical alignment film may impart a vertical orientation force to the liquid crystal compound present in the adjacent liquid crystal layer. The pretilt angle of the liquid crystal compound adjacent to the vertical alignment film may be in the range of 80 degrees to 100 degrees, 85 degrees to 95 degrees, 87 degrees to 93 degrees, or 89 degrees to 91 degrees, or may be approximately 90 degrees.

In one example, the peel force between the vertical alignment film and the carrier film at a peel angle of 180° and a peel rate of 300 mm/min may be 15 N/20mm or less. The peel force may be 14 N/20mm or less, 13 N/20mm or less, 12 N/20mm or less, or 11 N/20mm or less. When the peel force is within the above range, the carrier film may be well peeled off from the third laminate. The peel force may be a value measured while peeling the carrier film in the state of the third laminate. The lower limit of the peel force may be, for example, 3 N/20mm or more, or 4 N/20mm or more. The peel force may be further adjusted in terms of process stability. The peel force may be more specifically 10 N/20mm

or less, 9 N/20mm or less, 8 N/20mm or less, or 7 N/20mm or less. When the peel force is within the above range, it may be advantageous in terms of suppressing the possibility of introducing foreign substances due to static electricity generation upon peeling of the carrier film. The peel force may be more specifically 4.5 N/20mm or 5 N/20mm or more. When the peel force is within the above range, it may be advantageous in terms of suppressing the occurrence possibility of tunneling (a phenomenon in which peeling occurs when it passes through the guide roll during the film process due to low peel force between the alignment film and the carrier film).

The peel force between the vertical alignment film and the vertically aligned liquid crystal layer may be higher than the peel force between the vertical alignment film and the carrier film. Through this, when the carrier film is peeled after laminating the first laminate and the second laminate, only the carrier film can be preferably removed without causing the peeling between the vertical alignment film and the vertically aligned liquid crystal layer.

The vertical alignment film may comprise a photo-orientational compound and an acrylate with trifunctionalities or more. In this specification, the acrylate with trifunctionalities or more may mean a compound having three or more (meth)acrylate groups. The vertical alignment film may not comprise monofunctional acrylates and bifunctional acrylates. Through this, the carrier film can be well peeled off from the vertical alignment film of the third laminate without causing tunneling during the manufacturing process of the polarizing plate.

The acrylate with trifunctionalities or more may be a trifunctional acrylate or a tetrafunctional acrylate. The trifunctional acrylate may mean a compound having three (meth)acrylate groups. The tetrafunctional acrylate may mean a compound having four (meth)acrylate groups. In one example, the vertical alignment film may comprise a tetrafunctional acrylate alone as the acrylate with trifunctionalities or more. In another example, the vertical alignment film may comprise a trifunctional acrylate and a tetrafunctional acrylate as the acrylate with trifunctionalities or more.

The trifunctional acrylate may be exemplified by trimethylolpropane tri(meth)acrylate, ethoxylated trimethylolpropane tri(meth)acrylate, propoxylated trimethylolpropane tri(meth)acrylate, and tris-2-hydroxyethylisocyanurate tri(meth)acrylate, glycerin tri(meth)acrylate, pentaerythritol tri(meth)acrylate, dipentaerythritol tri(meth)acrylate or ditrimethylolpropane tri(meth)acrylate, and the like. According to one example of the present application, trimethylolpropane tri(meth)acrylate may be used as the trifunctional acrylate.

The tetrafunctional acrylate may be exemplified by pentaerythritol tetra(meth)acrylate, ditrimethylolpropane tetra(meth)acrylate or dipentaerythritol tetra(meth)acrylate, and the like. According to one example of the present application, pentaerythritol tetra(meth)acrylate may be used as the tetrafunctional acrylate.

In one example, the acrylate with trifunctionalities or more may be included in a range of 10 to 30 parts by weight relative to 100 parts by weight of the photo-orientational compound.

In one example, when the vertical alignment film comprises both a trifunctional acrylate and a tetrafunctional acrylate, the tetrafunctional acrylate may be included in a range of 100 to 500 parts by weight, 100 to 400 parts by weight, or 100 to 300 parts by weight relative to 100 parts by weight of the trifunctional acrylate.

The vertical alignment film may be a photo-alignment film comprising a photo-orientational compound. The photo-alignment film may exhibit orientation characteristics by a non-contact method such as irradiation of linearly polarized light.

The photo-orientational compound may mean a compound that is ordered in a predetermined direction (orientationally ordered) through irradiation of light, and is also capable of orienting an adjacent liquid crystal compound in a predetermined direction in the aligned state. The orientational compound may be a monomolecular compound, a monomeric compound, an oligomeric compound, or a polymeric compound, or may be in the form of a blend of the photo-orientational compound and a polymer. Here, the oligomeric or polymeric compound may have a residue derived from the above-described photo-orientational compound or the above-described photosensitive moiety in the main chain or in the side chain.

The photo-orientational compound may be a compound comprising a photosensitive moiety. Various photo-orientational compounds that can be used for orientation of the liquid crystal compound are known. As the photo-orientational compound, for example, compounds arranged by trans-cis photoisomerization; compounds arranged by photo-destruction such as chain scission or photo-oxidation; compounds arranged by photo-crosslinking or photopolymerization, such as [2+2] cycloaddition, [4+4] cycloaddition or photodimerization; compounds arranged by photo-Fries rearrangement, or compounds arranged by ring-opening/ring-closure reaction, and the like may be used. The compound arranged by trans-cis photoisomerization may be exemplified by, for example, an azo compound such as a sulfonated diazo dye or an azo polymer, or a stilbene compound, and the like, and the compound arranged by photolysis may be exemplified by cyclobutane-1,2,3,4-tetracarboxylic dianhydride, aromatic polysilane or polyester, polystyrene, or polyimide, and the like. In addition, the compound arranged by photo-crosslinking or photopolymerization may be exemplified by a cinnamate compound, a coumarin compound, a cinnamamide compound, a tetrahydrophthalimide compound, a maleimide compound, a benzophenone compound or a diphenylacetylene compound, or a compound having a chalconyl moiety as a photosensitive moiety (hereinafter, a chalcone compound), or a compound having an anthracenyl moiety (hereinafter, an anthracenyl compound), and the like; the compound arranged by photo-Fries rearrangement may be exemplified by an aromatic compound such as a benzoate compound, a benzoamide compound, or a methacrylamidoaryl

(meth)acrylate compound; and the compound arranged by ring-opening/ring-closure reaction may be exemplified by a compound arranged by ring-opening/ring-closure reaction of a [4+2] $\pi$-electronic system such as a spiropyran compound, and the like, without being limited thereto.

The polymer having a residue derived from the photo-orientational compound or a photosensitive moiety or capable of being mixed with the photo-orientational compound can be exemplified by polynorbornene, polyolefin, polyarylate, polyacrylate, poly(meth)acrylate, poly(amic acid), polymaleinimide, polyacrylamide, polymethacrylamide, polyvinyl ether, polyvinyl ester, polystyrene, polysiloxane, polyacrylonitrile or polymethacrylonitrile, and the like, but is not limited thereto.

The polymeric compound that can be used as the photo-orientational compound can be typically exemplified by polynorbornene cinnamate, polynorbornene alkoxycinnamate, polynorbornene allyloyloxycinnamate, polynorbornene fluorinated cinnamate, polynorbornene chlorinated cinnamate or polynorbornene dicinnamate, and the like, but is not limited thereto.

When the photo-orientational compound is a polymeric compound, the compound may have a number average molecular weight of, for example, about 10,000 g/mol to 500,000 g/mol or so, but is not limited thereto.

The vertical alignment film may be formed from a vertical alignment film composition comprising a photo-orientational compound and an acrylate with trifunctionalities or more. The vertical alignment film composition may further comprise a photoinitiator and a residual solvent. The photoinitiator may be used without any particular limitation as long as it can induce, for example, a free radical reaction by irradiation of light. Suh a photoinitiator may be exemplified by an alpha hydroxy ketone compound, an alpha amino ketone compound, a phenyl glyoxylate compound, or an oxime ester compound, and the like, and for example, an oxime ester compound may be used. The solvent may be exemplified by, for example, halogenated hydrocarbons such as chloroform, dichloromethane, tetrachloroethane, trichloroethylene, tetrachloroethylene or chlorobenzene; aromatic hydrocarbons such as benzene, toluene, xylene, methoxy benzene or 1,2-dimethoxy benzene; an alcohol such as acetone, methyl ethyl ketone, cyclohexanone, or cyclopentanone; a cellosolve such as methyl cellosolve, ethyl cellosolve, or butyl cellosolve; or an ether such as diethylene glycol dimethyl ether (DEGDME) or dipropylene glycol dimethyl ether (DPGDME), and the like, but is not limited thereto. The solvent may also be included in the form of a single solvent or a mixed solvent.

The contents of the components in the vertical alignment film composition may be appropriately selected within a range that does not impair the purpose of the present application. In one example, the vertical alignment film composition may comprise the photo-orientational compound in a range of 1 wt% to 10 wt%. In one example, the vertical alignment film composition may comprise the acrylate with trifunctionalities or more in a range of 0.2 wt% to 0.4 wt%. In one example, the vertical alignment film composition may comprise the photoinitiator in a range of 0.01 wt% to 0.1 wt%.

The vertical alignment film may be formed by coating the vertical alignment film composition on a carrier film and then irradiating it with polarized ultraviolet rays. The wavelength range of the ultraviolet rays may be, for example, in the range of 320 nm to 400 nm, or in the range of 340 nm to 380 nm. The irradiance level of the ultraviolet rays may be in the range of, for example, 500 $mJ/cm^2$ to 1000 $mJ/cm^2$.

The coating method of the vertical alignment film composition may be performed, for example, by the coating through a known coating method such as roll coating, a printing method, inkjet coating, a slit nozzle method, bar coating, comma coating, spin coating, or gravure coating. In addition, in forming the vertical alignment film, it may further comprise a process of drying the solvent before the composition of the vertical alignment film is coated and then irradiated with ultraviolet rays. The coating method and the drying process may also be applied to the process of forming the vertically aligned liquid crystal layer.

The thickness of the vertical alignment film may be appropriately selected within a range that does not impair the purpose of the present application. The thickness of the vertical alignment film may be, for example, in the range of 0.1$\mu$m to 0.5$\mu$m.

In one example, the first laminate may be prepared by a step of coating a vertical alignment film composition on a carrier film to form a vertical alignment film and a step of coating a vertically aligned liquid crystal composition on the vertical alignment film to form a vertically aligned liquid crystal layer.

The first laminate does not comprise a protective film for protecting the vertically aligned liquid crystal layer. That is, the first laminate does not comprise a protective film directly attached to the vertically aligned liquid crystal layer. The protective film may be, for example, a polyethylene terephthalate (PET) film. According to the present application, the vertical alignment film serves to protect the vertically aligned liquid crystal layer, so that a separate protective film for protecting the vertically aligned liquid crystal layer is not required. Therefore, according to the present application, optical anisotropy of a protective film such as a PET film does not need to be considered, so that the cross pol. test can be performed during the manufacturing process of the polarizing plate.

In this specification, the negative biaxial retardation film may mean a retardation film having characteristics satisfying Equation 3.

[Equation 3]

$$nx > ny > nz$$

In Equation 3, nx, ny, and nz mean the refractive indexes of the negative biaxial retardation film for light having a wavelength of 550 nm in the x-axis, y-axis, and z-axis directions, respectively. The definitions of the x-axis, y-axis and z-axis are the same as described above.

The negative biaxial retardation film may be a stretched polymer film. As the stretched polymer film, a COP (cyclo olefin polymer) film may be used.

The retardation value of the negative biaxial retardation film may be appropriately controlled according to the desired optical compensation. The in-plane retardation (Rin) value of the negative biaxial retardation film may be, for example, in the range of 110 nm to 140 nm. The thickness direction retardation (Rth) value of the negative biaxial retardation film may be, for example, in the range of 70 nm to 100 nm.

The polarizer may be a stretched polymer film containing a dichroic material. In this specification, the term polarizer means a film, sheet, or element having a polarization function. The polarizer is a functional element capable of extracting light vibrating in one direction from incident light vibrating in multiple directions.

The polarizer may be an absorption type polarizer. In this specification, the absorption type polarizer means an element that exhibits selective permeation and absorption properties for incident light. The absorption type polarizer may transmit light vibrating in one direction from incident light vibrating in multiple directions, and may absorb light vibrating in the other directions.

The polarizer may be a linear polarizer. In this specification, the linear polarizer means a case where the selectively transmitted light is linearly polarized light vibrating in one direction, and the selectively absorbed light is linearly polarized light vibrating in a direction orthogonal to the vibration direction of the linearly polarized light.

In one example, the dichroic material may be iodine or a dichroic dye. The dichroic material may be included in the stretched polymer film in an oriented state. In one example, the dichroic material may exist in a state oriented in the stretching direction of the stretched polymer film.

The stretched polymer film containing the dichroic material may be formed by dyeing the dichroic material on the polymer film and then stretching the polymer film. As the stretched polymer film, a polyvinyl alcohol-based stretched film may be used. The transmittance or polarization degree of the polarizer may be appropriately adjusted in consideration of the purpose of the present application. For example, the single transmittance of the polarizer may be 42.5% to 55%, and the polarization degree may be 65% to 99.9997%. The single transmittance to the polarization degree, for example, the single transmittance and the polarization degree may be values measured for light with a wavelength of 550 nm, respectively.

The first laminate and the second laminate may be laminated by an adhesive layer. At this time, the vertically aligned liquid crystal layer of the first laminate and the negative biaxial retardation film of the second laminate may be laminated to face each other. That is, one side of the adhesive layer may be in direct contact with the vertically aligned liquid crystal layer, and the other side of the adhesive layer may be in direct contact with the negative biaxial retardation film. The lamination of the first laminate and the second laminate may be performed by coating an adhesive layer on one side of the negative biaxial retardation film of the second laminate, and then laminating the vertically aligned liquid crystal layer of the first laminate to be in contact with the adhesive layer.

In the second laminate, the negative biaxial retardation film and the polarizer may also be laminated by an adhesive layer. One side of the adhesive layer may be in direct contact with the negative biaxial retardation film, and the other side may be in direct contact with the polarizer.

The adhesive layer mentioned in this specification may be, for example, an ultraviolet cure adhesive layer. An epoxy-based adhesive or an acrylic adhesive may be used as the ultraviolet cure adhesive. As the acrylic adhesive, for example, a polyester acrylic adhesive, a polystyrene acrylic adhesive, an epoxy acrylic adhesive, a polyurethane acrylic adhesive or a polybutadiene acrylic adhesive, a silicone acrylic adhesive, or an alkyl acrylic adhesive, and the like may be used, without being limited thereto. The thickness of the adhesive layer may be, for example, in the range of 1$\mu$m to 10$\mu$m, 1$\mu$m to 5$\mu$m, or 1$\mu$m to 3$\mu$m.

The second laminate may not comprise a liquid crystal alignment film and a liquid crystal layer. The liquid crystal alignment film may be a vertical alignment film, and the liquid crystal layer may be a vertically aligned liquid crystal layer. That is, according to the method for manufacturing a polarizing plate of the present application, the vertically aligned liquid crystal layer is not directly formed on the negative biaxial retardation film. Therefore, it is possible to solve the disadvantage of discarding even the negative biaxial retardation film due to poor liquid crystal orientation and liquid crystal stains. In addition, a separate protective film for protecting the vertically aligned liquid crystal layer is not required, so that the cross pol. test can be performed even during the manufacturing process of the polarizing plate.

The second laminate may further comprise a surface treatment film. The surface treatment film may be laminated

on the polarizer via an adhesive layer. The surface treatment film may comprise a base film and a surface treatment layer formed on the base film. The base film may be disposed closer to the polarizer than the surface treatment layer. Therefore, one side of the adhesive layer may be in direct contact with the base film and the other side of the adhesive layer may be in direct contact with the polarizer. The base film may be exemplified by a TAC (triacetyl cellulose) film, a COP (cyclo olefin copolymer) film, an acryl film, or a PET (polyethyleneterephtalate) film, and the like. The surface treatment layer may be exemplified by an antireflection layer, a hard coating layer, and the like. As the antireflection layer or the hard coating layer, those known to be applicable to a polarizing plate may be used.

In one example, the second laminate may be prepared by laminating a surface treatment film on one side of the polarizer via an adhesive layer, and laminating a negative biaxial retardation film on the other side of the polarizer via an adhesive layer. In one example, the cross pol. test may be performed in the state of the second laminate.

The third laminate may comprise a first laminate and a second laminate. In one example, the third laminate may sequentially comprise a carrier film, a vertically aligned liquid crystal layer, an adhesive layer, a negative biaxial retardation film, and a polarizer. In one example, the third laminate may further comprise a vertical alignment film between the carrier film and the vertically aligned liquid crystal layer. In one example, the third laminate may further comprise a surface treatment film on the side of the polarizer on which the negative biaxial retardation film does not exist. In this case, the third laminate may sequentially comprise a carrier film, a vertical alignment film, a vertically aligned liquid crystal layer, an adhesive layer, a negative biaxial retardation film, a polarizer, and a surface treatment film.

The method for manufacturing a polarizing plate may further comprise a step of peeling the carrier film from the third laminate. According to the method for manufacturing a polarizing plate of the present application, after laminating a polarizer and a negative biaxial retardation film first, a vertically aligned liquid crystal layer may be laminated on the negative biaxial retardation film by a transfer method. Therefore, it is possible to solve problems that may occur in a method of directly forming (e.g., coating) a vertically aligned liquid crystal layer on the negative biaxial retardation film.

The method for manufacturing the polarizing plate may further comprise, before peeling the carrier film from the third laminate, a step of laminating a protective film on the side of the polarizer on which the negative biaxial retardation film does not exist. When the surface treatment film is present on one side of the polarizer, the protective film may be laminated on the side of the surface treatment film on which the polarizer is not present. The lamination of the protective film may be performed via a pressure-sensitive adhesive layer. One side of the pressure-sensitive adhesive layer may be in direct contact with the protective film, and the other side of the pressure-sensitive adhesive layer may be in direct contact with the surface treatment layer. As the protective film, for example, a polyethylene terephthalate (PET) film may be used.

The method for manufacturing a polarizing plate may further comprise, after peeling the carrier film from the third laminate, a step of attaching a release film to the side, on which the carrier film of the third laminate is peeled off, via a pressure-sensitive adhesive layer. When the first laminate and the third laminate further each comprise a vertical alignment film, one side of the vertical alignment film may be exposed after peeling the carrier film from the third laminate. In this case, the release film may be attached to one side of the vertical alignment film via a pressure-sensitive adhesive layer. That is, one side of the pressure-sensitive adhesive layer may be in direct contact with the vertical alignment film, and the other side of the pressure-sensitive adhesive layer may be in direct contact with the release film. The pressure-sensitive adhesive layer may be used as a use for attaching a polarizing plate to a display device. The release film may serve to protect the pressure-sensitive adhesive layer before attaching the polarizing plate to the display device. As the release film, for example, a polyethylene terephthalate (PET) film may be used.

As the pressure-sensitive adhesive mentioned in this specification, a known pressure-sensitive adhesive such as an acrylic pressure-sensitive adhesive, a silicone-based pressure-sensitive adhesive, a rubber-based pressure-sensitive adhesive, or a urethane pressure-sensitive adhesive may be used without any particular limitation. The thickness of the pressure-sensitive adhesive layer may be, for example, in the range of 10$\mu$m to 40$\mu$m, 10$\mu$m to 30$\mu$m, or 10$\mu$m to 20$\mu$m.

The present application also relates to a polarizing plate. The polarizing plate may comprise, for example, a vertically aligned liquid crystal layer, a negative biaxial retardation film, and a polarizer, and may further comprise an adhesive layer for attaching the negative biaxial retardation film and the vertically aligned liquid crystal layer to each other.

In the polarizing plate, the vertically aligned liquid crystal layer may be present on one side of the negative biaxial retardation film, and the polarizer may be present on the other side of the negative biaxial retardation film. The negative biaxial retardation film may be, for example, a stretched polymer film.

In one example, the polarizing plate does not comprise a liquid crystal alignment film in direct contact with the negative biaxial retardation film and/or a liquid crystal layer in direct contact with the negative biaxial retardation film. This is because, in the case of the polarizing plate of the present application, the vertically aligned liquid crystal layer is formed by a transfer method rather than a method of coating the vertically aligned liquid crystal on the negative biaxial retardation film.

The polarizing plate may further comprise a vertical alignment film present on the opposite side of the side of the vertically aligned liquid crystal layer, on which the negative biaxial retardation film is present. The vertical alignment

film may comprise a photo-orientational compound and an acrylate with trifunctionalities or more.

The polarizing plate may further comprise a surface treatment film on one side of the polarizer. The surface treatment film may be present on the opposite side of the side of the polarizer on which the negative biaxial retardation film is present.

The polarizing plate may further comprise a protective film on one side of the surface treatment film. The protective film may be present on the opposite side of the side of the surface treatment film on which the polarizer is present.

The polarizing plate may further comprise a release film attached to one side of the vertical alignment film via a pressure-sensitive adhesive layer. The release film may be present on the opposite side of the side of the vertical alignment film on which the vertically aligned liquid crystal layer is present.

The polarizing plate may be manufactured according to the method for manufacturing a polarizing plate. Therefore, unless there is a special mention about the polarizing plate, the contents described in the method for manufacturing a polarizing plate may be equally applied.

The polarizing plate according to the present application may be used as an optical compensation polarizing plate. Such a polarizing plate may be used in various display devices. The display device is a device having a display element, which comprises a light emitting element or a light emitting device as a light emitting source. The display device may include a liquid crystal display device, an organic electroluminescence (EL) display device, an inorganic electroluminescence (EL) display device, a touch panel display device, an electron emission display device (electric field emission display device (FED, etc.), surface field emission display device (SED)), an electronic paper (display device using electronic ink or electrophoretic element), a plasma display device, a projection display device (grating light valve (GLV) display device, display device having digital micromirror device (DMD)), and a piezoelectric ceramic display, and the like. The liquid crystal display device includes any of a transmissive liquid crystal display device, a semi-transmissive liquid crystal display device, a reflective liquid crystal display device, a direct view type liquid crystal display device, and a projection type liquid crystal display device, and the like. These display devices may be a display device that displays a two-dimensional image or a stereoscopic display device that displays a three-dimensional image. In particular, a circular polarizing plate may be effectively used for an organic EL display device and an inorganic EL display device, and an optical compensation polarizing plate may be effectively used for a liquid crystal display device and a touch panel display device.

The present application also relates to a use of the polarizing plate. The present application relates to an automotive display comprising the polarizing plate. In this specification, the automotive display may mean a display applied to automobiles, which may be exemplified by, for example, an instrument panel, a vehicle information guide display, a head-up display, a passenger seat display, a side mirror display, a rear seat entertainment display, and the like. The size of the polarizing plate may be appropriately selected according to the applied display size. In one example, when the polarizing plate is applied as the automotive display, horizontal, vertical, or diagonal lengths may be 5 inches to 48 inches or so.

[Effects of Invention]

The present application relates to a method for manufacturing a polarizing plate. The present application can provide a method for manufacturing a polarizing plate, wherein the manufacturing processes are simple and the manufacturing cost can be reduced. Such a polarizing plate can be used as an optical compensation polarizing plate in various display devices.

[Brief Description of Drawings]

Figure 1 exemplarily shows a method for manufacturing a polarizing plate of the present application.

[Mode for Invention]

Hereinafter, the present application will be specifically described through Examples according to the present application and Comparative Examples not according to the present application, but the scope of the present application is not limited by Examples presented below.

**Example 1. Manufacturing of polarizing plate A**

A polarizing plate was manufactured according to the manufacturing process of Figure 1.

Specifically, a vertical alignment film composition was coated on a carrier film (TAC film, thickness: 80μm) (1), dried in an oven at 80°C for 2 minutes, and then irradiated with polarized ultraviolet light with a wavelength of 360nm at an irradiance level of 750 mJ/$cm^2$ to form a vertical alignment film (2) with a thickness of 0.3μm. The vertical alignment

film composition comprises a content of a photo-orientational compound of Formula A (molecular weight Mw = 150,000) in a solid content concentration of 1.5 wt%, PETA (pentaerythritol tetraacrylate) as an acrylate with trifunctionalities or more in a solid content concentration of 0.2 wt% and OXE02 (Igacure) as a photoinitiator in a solid content concentration of 0.016 wt% in a solvent (toluene). In the vertical alignment film composition, the acrylate with trifunctionalities or more is included in a content of about 13 parts by weight relative to 100 parts by weight of the photo-orientational compound. A vertically aligned liquid crystal composition (product name: RMM460, manufacturer: Merck) was coated on the vertical alignment film and irradiated with UV with a wavelength of 360 nm at 750 mJ/cm$^2$ to be cured, thereby forming a vertically aligned liquid crystal layer (3) with a thickness of 1.1μm. The first laminate sequentially comprises the carrier film, the vertical alignment film, and the vertically aligned liquid crystal layer (a in Figure 1).

[Formula A]

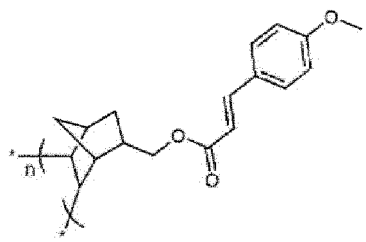

A negative biaxial retardation film (Zeon's COP film) (5) with a thickness of 30μm was laminated on one side of a PVA-based polarizer (4) with a thickness of 12μm via an adhesive layer (not shown), and an HC/TAC film (comprising a TAC film and a hard coating layer formed on one side of the TAC film) (6) with a total thickness of 45μm as a surface treatment film was laminated on the other side of the PVA-based polarizer via an adhesive layer (not shown) to manufacture a second laminate (b in Figure 1). At this time, the TAC film was laminated to be closer to the polarizer than the hard coating layer. As the polarizer, a PVA-based stretched film dyed with iodine was used. As the adhesive layer, a UV cure epoxy-based adhesive layer with a thickness of 2μm was used.

An epoxy-based UV cure adhesive layer (7) with a thickness of 2μm was coated on the negative biaxial retardation film (5) of the second laminate, and then the first laminate and the second laminate were laminated so that the vertically aligned liquid crystal layer (3) of the first laminate was attached to the adhesive layer (7) (c in Figure 1).

A protective film (PET film with a thickness of 120μm) (8) was attached to the upper surface of the HC/TAC film (6) of the laminate in c of Figure 1 via an acrylate-based UV cure pressure-sensitive adhesive with a thickness of 13μm (not shown) (d in Figure 1).

The carrier base material (1) was peeled off from the laminate in d of Figure 1, and then a release film (PET film) (10) with a thickness of 35μm was attached thereto via an acrylate-based UV cure pressure-sensitive adhesive layer (9) with a thickness of 15μm to manufacture a polarizing plate (e in Figure 1).

**Example 2**

A polarizing plate was manufactured in the same manner as in Example 1, except that the solid content of PETA in the vertical alignment film composition was changed to 0.25 wt%. In the vertical alignment film composition, the acrylate with trifunctionalities or more is included in a content of about 17 parts by weight relative to 100 parts by weight of the photo-orientational compound.

**Example 3**

A polarizing plate was manufactured in the same manner as in Example 1, except that the solid content of PETA in the vertical alignment film composition was changed to 0.3 wt%. In the vertical alignment film composition, the acrylate with trifunctionalities or more is included in a content of about 20 parts by weight relative to 100 parts by weight of the photo-orientational compound.

**Example 4**

A polarizing plate was manufactured in the same manner as in Example 1, except that the solid content of PETAin the vertical alignment film composition was changed to 0.35 wt%. In the vertical alignment film composition, the acrylate with trifunctionalities or more is included in a content of about 23 parts by weight relative to 100 parts by weight of the photo-orientational compound.

**Example 5**

A polarizing plate was manufactured in the same manner as in Example 1, except that in the vertical alignment film composition, as the acrylate with trifunctionalities or more, TMPTA (trimethylolpropane triacrylate) was changed to have a solid content of 0.1 wt%, and PETA was changed to have a solid content of 0.1 wt%, and the solid content of the photoinitiator OXE02 (Igacure) was changed to 0.0175 wt%. In the vertical alignment film composition, the acrylates with trifunctionalities or more are included in a content of about 13 parts by weight relative to 100 parts by weight of the photo-orientational compound, and the acrylate with tetra-functionalities is included in a content of 100 parts by weight based on 100 parts by weight of the acrylate with trifunctionalities.

**Example 6**

A polarizing plat was manufactured in the same manner as in Example 1, except that in the vertical alignment film composition, as the acrylate with trifunctionalities or more, TMPTA was changed to have a solid content of 0.1 wt%, PETA was changed to have a solid content of 0.2 wt%, and the solid content of photoinitiator OXE02 (Igacure) was changed to 0.0175 wt%. In the vertical alignment film composition, the acrylates with trifunctionalities or more are included in a content of about 20 parts by weight relative to 100 parts by weight of the photo-orientational compound, and the acrylate with tetra-functionalities is included in a content of 200 parts by weight relative to 100 parts by weight of the acrylate with trifunctionalities.

**Example 7**

A polarizing plate was manufactured in the same manner as in Example 1, except that in the vertical alignment film composition, as the acrylate with trifunctionalities or more, TMPTA was changed to have a solid content of 0.1 wt%, and PETA was changed to have a solid content of 0.3 wt%, and the solid content of photoinitiator OXE02 (Igacure) was changed to 0.0175 wt%. In the vertical alignment film composition, the acrylates with trifunctionalities or more are included in a content of about 27 parts by weight relative to 100 parts by weight of the photo-orientational compound, and the acrylate with tetra-functionalities is included in a content of 300 parts by weight relative to 100 parts by weight of the acrylate with trifunctionalities.

**Comparative Example 1**

A negative biaxial retardation film (Zeon's COP film) with a thickness of 30μm was laminated on one side of a PET film (product of LGC) with a thickness of 38μm via a pressure-sensitive adhesive layer (S1). As the pressure-sensitive adhesive layer, an acrylic pressure-sensitive adhesive layer with a thickness of 10μm was used (S1).

Next, a vertical alignment film having a thickness of 0.3μm was formed on the side of the negative biaxial retardation film on which the PET film was not present, and then a vertically aligned liquid crystal layer with a thickness of 1.1μm was formed on the vertical alignment film. A PET film (product of LGC) with a thickness of 38μm was laminated on the side of the vertically aligned liquid crystal layer, on which the vertical alignment film was not present, via a pressure-sensitive adhesive layer. The vertical alignment film composition was coated on the negative biaxial retardation film, dried in an oven at 80°C for 2 minutes, and then irradiated with polarized ultraviolet light with a wavelength of 360nm at an irradiance level of 750 mJ/cm$^2$ to form the vertical alignment film. The composition of the vertical alignment film composition was the same as in Example 1. A vertically aligned liquid crystal composition (product name: RMM460, manufacturer: Merck) was coated on the vertical alignment film and irradiated with unpolarized ultraviolet light with a wavelength of 360nm at 750 mJ/cm$^2$ to be cured, thereby forming the vertically aligned liquid crystal layer. As the pressure-sensitive adhesive layer, an acrylic pressure-sensitive adhesive layer with a thickness of 10μm was used (S2).

Next, the PET film laminated on the negative biaxial retardation film was peeled off (S3).

Next, a PVA-based polarizer with a thickness of 12μm was laminated on the side of the negative biaxial retardation film, on which the vertically aligned liquid crystal layer was not present, via an adhesive layer, and an HC/TAC film (comprising a TAC film and a hard coating layer formed on one side of the TAC film) with a total thickness of 45μm as a surface treatment film was laminated on the side of the polarizer, on which the negative biaxial retardation film was not present, via an adhesive layer. As the polarizer, a PVA-based stretched film dyed with iodine was used. As both of the adhesive layers, a UV cure epoxy-based adhesive layer with a thickness of 2μm was used (S4).

Next, the PET film laminated on the vertically aligned liquid crystal layer was peeled off, and then a PE (polyethylene) film (product of Ilshin) with a thickness of 60μm was laminated on the peeled side of the vertically aligned liquid crystal layer (S5).

Next, a protective film (PET film) with a thickness of 120μm was laminated on the side of the HC/TAC film, on which the polarizer was not present, via an acrylate-based UV cure pressure-sensitive adhesive with a thickness of 13

μm (S6).

Next, the PE film was peeled off from the vertically aligned liquid crystal layer, and then a release film (PET film) with a thickness of 35μm was laminated on the peeled side via an acrylate-based UV cure pressure-sensitive adhesive layer with a thickness of 15μm to manufacture a polarizing plate (S7).

**Evaluation Example 1. Cross pol. test**

In order to evaluate the quality of the polarizing plate, a cross pol. test was performed during the manufacturing process of the polarizing plate. The cross pol. test may be performed by placing a polarizing plate for inspection on a polarizing plate to be inspected so that their absorption axes are orthogonal to each other and confirming that black spots or white light are generated.

The cross pol. test was performed in the film attaching process after stretching of the polarizer during the manufacturing process of the polarizing plate. In the case of the second laminate in step b of Example 1, the cross pol. test was possible at the gate before the second laminate laminating the HC/TAC film, the polarizer, and the negative biaxial retardation film was wound. However, in the case of the laminate in step S4 of Comparative Example 1, a rainbow phenomenon rather than a black state occurred due to the optical anisotropy of the PET film, whereby the test could not be accurately performed.

**Measurement example 1. Measurement of peel force**

During the manufacturing process of the polarizing plates of Examples and Comparative Examples, the optical laminate (width × length: 5cm × 23cm) with the structure of Figure 1(d) was attached to a glass substrate (width × length: 7cm × 25cm) via an acrylate-based pressure-sensitive adhesive layer with a thickness of 22μm. At this time, the protective film in the optical laminate of Figure 1(d) was made to be attached to the glass substrate. The polarizing plate was attached to the glass substrate, and then the carrier film was peeled off at a peel angle of 180° and a peel rate of 300 mm/min, whereby the peel force between the vertical alignment film and the carrier film was measured (measurement temperature: 25°C). The peel force was measured using Samji Tech's high-speed peeler, where the setting conditions were set to a channel of 5 kg, a load of normal value, and a test speed of 300 mm/min. Specifically, the main power of the control box of the high-speed peeler was turned on. After selecting AUTO MANU in the control box, S/W was selected as AUTO. The HTester shortcut on the wallpaper was double-clicked. In the test setup tab at the top right, the conditions to be tested, the load and the test speed were selected. After fixing the sample to the test table with a tape, the lock handle was erected vertically. After completing the sample preparation of the item to be tested, Auto Zero at the bottom right of the program screen was clicked to adjust the load cell zero point. The start button at the bottom right was pressed to operate the device according to the setting values. When the test is stopped and the manual section button is clicked to set an arbitrary section, three section average values are automatically calculated. The test was completed by manually inputting data of three average values into the QMS (quality management system).

For Examples 1 to 7, the peel force between the vertical alignment film and the carrier film was measured according to Measurement Example 1, and the results were described in Table 1 below. In the case of Examples 1 to 7, the carrier film could be well peeled from the vertical alignment film.

[Table 1]

| | Vertical alignment film | | Peel force (180° and 300 mm/min) | Determination |
|---|---|---|---|---|
| | Multifunctional acrylate | Content (wt%) | | |
| Example 1 | PETA | 0.2 | 4 N/20mm | Peeled |
| Example 2 | PETA | 0.25 | 6 N/20mm | Peeled |
| Example 3 | PETA | 0.3 | 8.5 N/20mm | Peeled |
| Example 4 | PETA | 0.35 | 11 N/20mm | Peeled |
| Example 5 | PETA/TMPTA | 0.1/0.1 | 5 N/20mm | Peeled |
| Example 6 | PETA/TMPTA | 0.2/0.1 | 6 N/20mm | Peeled |
| Example 7 | PETA/TMPTA | 0.3/0.1 | 7 N/20mm | Peeled |

[Explanation of Reference Numerals]

1: carrier film, 2: vertical alignment film, 3: vertically aligned liquid crystal layer, 4: polarizer, 5: negative biaxial retardation film, 6: surface treatment film, 7: adhesive layer, 8: protective film, 9: pressure-sensitive adhesive layer, 10: release film

## Claims

1. A method for manufacturing a polarizing plate comprising a step of laminating a first laminate comprising a carrier film and a vertically aligned liquid crystal layer, and a second laminate comprising a negative biaxial retardation film and a polarizer via an adhesive layer to manufacture a third laminate.

2. The method for manufacturing a polarizing plate according to claim 1, wherein the first laminate further comprises a vertical alignment film between the carrier film and the vertically aligned liquid crystal layer.

3. The method for manufacturing a polarizing plate according to claim 2, wherein a peel force between the vertical alignment film and the carrier film at a peel angle of 180° and a peel rate of 300 mm/min is 15 N/20mm or less.

4. The method for manufacturing a polarizing plate according to claim 2, wherein the vertical alignment film comprises a photo-orientational compound and an acrylate with trifunctionalities or more.

5. The method for manufacturing a polarizing plate according to claim 1, wherein the first laminate comprises no protective film for protecting the vertically aligned liquid crystal layer.

6. The method for manufacturing a polarizing plate according to claim 1, wherein the negative biaxial retardation film is a stretched polymer film.

7. The method for manufacturing a polarizing plate according to claim 1, wherein the adhesive layer is an ultraviolet cure adhesive layer.

8. The method for manufacturing a polarizing plate according to claim 1, wherein the second laminate does not include a liquid crystal alignment film and a liquid crystal layer.

9. The method for manufacturing a polarizing plate according to claim 1, further comprising a step of peeling the carrier film from the third laminate.

10. The method for manufacturing a polarizing plate according to claim 9, further comprising a step of attaching a release film to a side of the third laminate, on which the carrier film is peeled off, via a pressure-sensitive adhesive layer.

11. A polarizing plate comprising a vertically aligned liquid crystal layer, a negative biaxial retardation film, and a polarizer, and further comprising:
an adhesive layer for attaching the vertically aligned liquid crystal layer and the negative biaxial retardation film.

12. The polarizing plate according to claim 11, which does not include a liquid crystal alignment film and a liquid crystal layer in direct contact with the negative biaxial retardation film.

13. The method for manufacturing a polarizing plate according to claim 11, wherein the negative biaxial retardation film is a stretched polymer film.

14. The polarizing plate according to claim 11, further comprising a vertical alignment film present on an opposite side of a side of the vertically aligned liquid crystal layer on which the negative biaxial retardation film is present.

15. The polarizing plate according to claim 14, wherein the vertical alignment film comprises a photo-orientational compound and an acrylate with trifunctionalities or more.

[Figure 1]

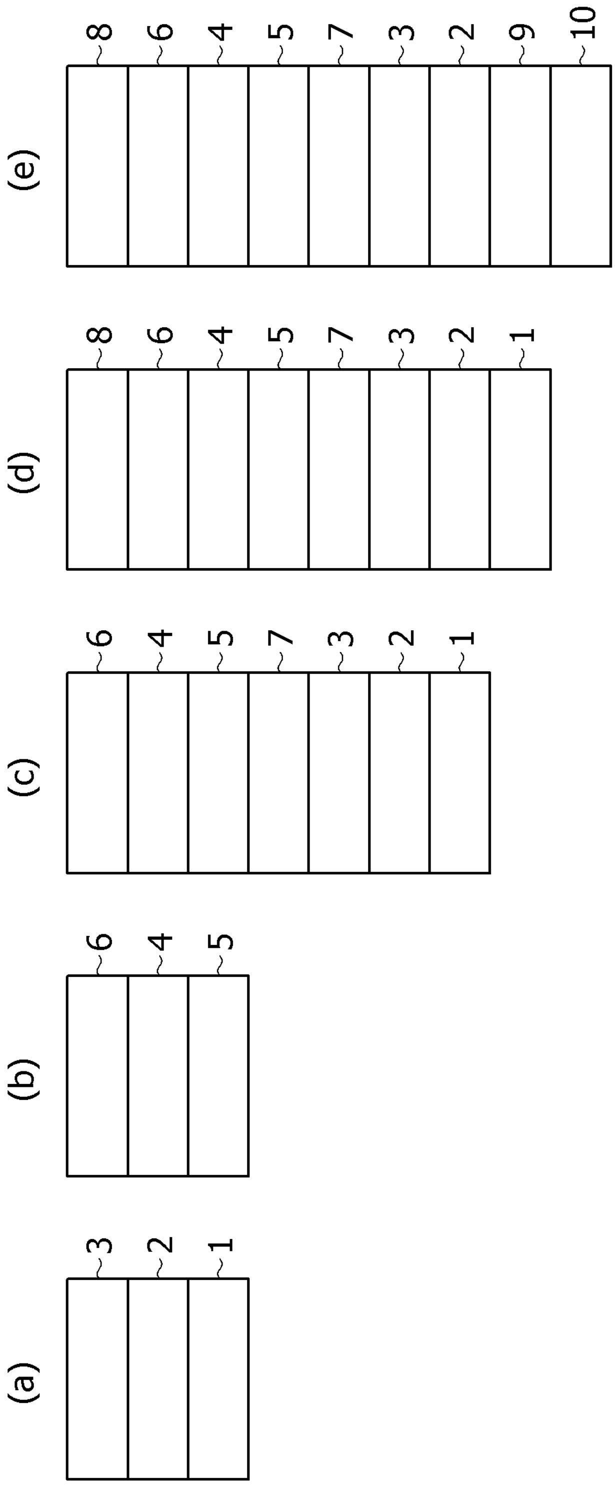

## INTERNATIONAL SEARCH REPORT

International application No.
**PCT/KR2022/014425**

**A. CLASSIFICATION OF SUBJECT MATTER**

**B32B 7/023**(2019.01)i; **B32B 37/26**(2006.01)i; **B32B 37/12**(2006.01)i; **B32B 27/30**(2006.01)i; **G02B 5/30**(2006.01)i; **G02B 1/04**(2006.01)i; **G02B 1/14**(2015.01)i

According to International Patent Classification (IPC) or to both national classification and IPC

**B. FIELDS SEARCHED**

Minimum documentation searched (classification system followed by classification symbols)

B32B 7/023(2019.01); C08J 5/18(2006.01); C09J 7/20(2018.01); G02B 5/30(2006.01); G02F 1/1335(2006.01); G02F 1/13363(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 편광판(polarizer), 캐리어 필름(carrier film), 수직 배향 액정층(homeotropic liquid crystal layer), 음의 이축성 위상차 필름(negative biaxial retardation film), 적층체(laminate), 접착제층(adhesive layer)

**C. DOCUMENTS CONSIDERED TO BE RELEVANT**

| Category* | Citation of document, with indication, where appropriate, of the relevant passages | Relevant to claim No. |
|---|---|---|
| Y | KR 10-2016-0052353 A (SUMITOMO CHEMICAL CO., LTD.) 12 May 2016 (2016-05-12) See claims 1, 5, 7 and 10; and paragraphs [0059], [0073], [0074], [0166]-[0168], [0184], [0185], [0190], [0241]-[0245], [0252], [0253], [0281]-[0283] and [0293]. | 1-15 |
| Y | KR 10-0769446 B1 (LG CHEM, LTD.) 22 October 2007 (2007-10-22) See claims 1, 4, 5, 9 and 10; and paragraphs [0043], [0079] and [0080]. | 1-15 |
| Y | KR 10-1676894 B1 (LG CHEM, LTD.) 29 November 2016 (2016-11-29) See claims 1, 9, 11, 15 and 20; and paragraphs [0149]-[0150]. | 4,15 |
| A | KR 10-1851282 B1 (DONGWOO FINE-CHEM CO., LTD.) 07 June 2018 (2018-06-07) See entire document. | 1-15 |
| A | EP 2192439 A2 (STANLEY ELECTRIC CO., LTD.) 02 June 2010 (2010-06-02) See entire document. | 1-15 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **04 January 2023** | **05 January 2023** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.
**PCT/KR2022/014425**

| Patent document cited in search report | Publication date (day/month/year) | Patent family member(s) | Publication date (day/month/year) |
|---|---|---|---|
| KR 10-2016-0052353 A | 12 May 2016 | JP 2016-091022 A | 23 May 2016 |
| | | US 2016-0124131 A1 | 05 May 2016 |
| KR 10-0769446 B1 | 22 October 2007 | CN 100578320 C | 06 January 2010 |
| | | CN 101111797 A | 23 January 2008 |
| | | EP 1834208 A1 | 19 September 2007 |
| | | JP 2008-530586 A | 07 August 2008 |
| | | KR 10-2006-0128731 A | 14 December 2006 |
| | | TW 200700848 A | 01 January 2007 |
| | | TW I361321 B | 01 April 2012 |
| | | US 2007-0091229 A1 | 26 April 2007 |
| | | WO 2006-132507 A1 | 14 December 2006 |
| KR 10-1676894 B1 | 29 November 2016 | KR 10-2012-0099183 A | 07 September 2012 |
| | | US 2012-0212692 A1 | 23 August 2012 |
| | | US 9151869 B2 | 06 October 2015 |
| KR 10-1851282 B1 | 07 June 2018 | None | |
| EP 2192439 A2 | 02 June 2010 | EP 2192439 A3 | 22 August 2012 |
| | | EP 2192439 B1 | 23 January 2019 |
| | | JP 2010-128094 A | 10 June 2010 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 100767210